# EUROPÄISCHE PATENTSCHRIFT

(11) **EP 1 579 934 B1**
(45) Veröffentlichungstag und Bekanntmachung des Hinweises auf die Patenterteilung: **03.12.2008**
(21) Anmeldenummer: 05006684.4
(22) Anmeldetag: 26.03.2005
(51) Int. Cl.: B22C 1/08, B22C 1/18

(54) **Verfahren zur Herstellung einer Muffel für den Fein- oder Modellguss sowie Zusammensetzung zu deren Herstellung**
Process for the production of a muffle for investment casing or modell casting and composition of such a muffle
Procédé de fabrication d'un moufle pour le moulage de précision ou le moulage sur modèle ainsi que la composition pour sa fabrication

(30) Priorität: 25.03.2004 DE 102004014573
(43) Veröffentlichungstag der Anmeldung: 28.09.2005
(73) Patentinhaber: BEGO Bremer Goldschlägerei Wilh.-Herbst GmbH & Co KG, 28359 Bremen (DE)
(72) Erfinder: Wiest, Thomas, Dr., 36088 Hünfeld (DE); Dierkes, Stephan, Dr., 28195 Bremen (DE); Schlüter, Martin, Dr., 28719 Bremen (DE)
(74) Vertreter: Eisenführ, Speiser & Partner

(56) Entgegenhaltungen:
- WO-A-99/41030
- DE-A- 19 607 380

## Beschreibung

Die Erfindung betrifft ein Verfahren zur Herstellung einer Muffel für den Fein-oder Modellguss, ein Verfahren zum Herstellen eines metallischen, keramischen oder glaskeramischen Guss- oder Pressobjekts und ein Kit zur Herstellung eines solchen Objekts.

Bekannt sind Verfahren zur Herstellung einer Muffel in der Zahntechnik zum Gießen von Zahnrestaurationen, beispielsweise Inlays oder Onlays, Kronen, Brücken und Modellgussobjekte. Zur Herstellung derartiger Zahnrestaurationen wird vom Zahnarzt ein Abdruck der Situation im Mund eines Patienten genommen. Dieser Abdruck wird mit einem Modellmaterial ausgegossen (z.B. Gips oder Kunststoff). Anschließend wird an diesem Modell die geplante Zahnrestauration in Gusswachs oder Kunststoff modelliert und dem Modell entnommen. An diese Gusswachs- oder Kunststoffmodellation wird ein Wachsdraht angelegt und mit ihm verbunden, sodass eine Modellation (pattern) für den späteren Guss erhalten wird. Der Wachsdraht dient dem Bilden eines Gusskanals in einem späteren Verfahrensschritt. Das Gussobjekt, das am Ende des Verfahrens erhalten wird, soll in seinen Abmessungen dieser Modellation möglichst exakt entsprechen.

Die so erhaltene Modellation wird mit dem Wachsdraht auf dem Boden eines Muffelsockels befestigt. Anschließend wird ein Muffelformer angebracht, der die Modellation seitlich umschließt. Der Muffelformer wird nun vollständig mit Einbettmasse aufgefüllt. Nach dem Abbinden der Einbettmasse wird diese vom Muffelformer gelöst. Im Falle eines Metallmuffelformers verbleibt derselbe an der Muffel.

Alternativ wird von dem Modell ein Einbettmasseduplikat hergestellt. Die Modellation wird auf dem Duplikat erstellt, dort mit Gusskanälen aus Wachs oder Kunststoff versehen und nach dem Anbringen eines Muffelformers eingebettet. In einer weiteren Verfahrensmodifikation wird die auf dem Einbettmasseduplikat erstellte Modellation aus lichtaushärtbarem Material mit Licht spezieller Wellenlänge ausgehärtet, vom Duplikat abgehoben und wie oben beschrieben eingebettet.

Die entstandene Muffel wird ggf. dem Muffelformer entnommen und kontinuierlich von Raumtemperatur auf ca. 600°C-1100°C (je nach Indikation) aufgeheizt. Alternativ kann die Muffel aus geeigneter Einbettmasse auch direkt in den auf höhere Temperaturen vorgewärmten Ofen eingelegt werden. Im Speziellen ist auch das Einlegen bei 1000°C bis 1100°C möglich. Dabei schmilzt bzw. verbrennt die Modellation aus Gusswachs bzw. Kunststoff weitgehend rückstandsfrei. Im Inneren der Muffel befinden sich danach ein Hohlraum und ein Gusskanal, die durch das Verbrennen des Gusswachses vom Wachsdraht gebildet wurden.

Die so erhaltene Muffel wird im heißen oder kalten Zustand mit flüssiger Schmelze oder fließfähiger keramischer oder glaskeramischer Masse aufgefüllt und langsam abgekühlt. Nach Zerstören der Gussform, die aus diesem Grund auch verlorene Form genannt wird, kann das Gussteil entnommen und abschließend fertig bearbeitet werden. Der Guss in die verlorene Gussform ist ein in der Zahntechnik seit langem bekanntes und beherrschtes Verfahren, um Zahnrestaurationen aus Metall, Keramik oder Glaskeramik herzustellen, und es wird regelmäßig im zahntechnischen Laboratorium eingesetzt.

Um eine gute Passung der auf diese Art und Weise hergestellten Gusskörper als Zahnrestauration zu gewährleisten, ist es notwendig, enge Toleranzen einzuhalten. Aufgrund des großen Temperaturunterschieds zwischen der Erstarrungstemperatur der Schmelze und der Raumtemperatur spielen dabei die Ausdehnung bzw. Schrumpfung des Gusskörpers und der Gussform eine entscheidende Rolle.

Um die Ausdehnung der Gussform in Abhängigkeit von der Temperatur möglichst kontrolliert einstellen zu können, sind daher spezielle Einbettmassen entwickelt worden. Einbettmassen nach dem Stand der Technik enthalten Anteile an Quarz und Cristobalit bzw. Tridymit, die bei Erhitzen durch einen Wechsel in die deutlich volumenvergrößerte Hochtemperaturmodifikation zur thermischen Expansion der Gussform beitragen. Bei den Massen nach dem Stand der Technik basiert die thermische Ausdehnung der Einbettmasse neben der Wärmeausdehnung der gesamten Masse vor allem auf der thermisch aktivierten Umorientierung der SiO₂-Gittermodifikation. Bei diesen Einbettmassen ist die thermische Expansion nicht-linear von der Temperatur abhängig und zum größten Teil reversibel. Neben der thermischen Expansion unterliegen die gebräuchlichen Einbettmassen auch einer Expansion, die sich während des Abbindens entwickelt. In der Regel ist diese Abbindeexpansion durch Variation der Konzentration einer zu verwendenden Anmischflüssigkeit steuerbar. Somit kann auf die unterschiedlichen Anforderungen aus der zahntechnischen Praxis reagiert werden (Anmischparameter, Legierungen, Form und Masse der zu erstellenden Objekte usw.).

Um eine homogene Ausdehnung der Gussform zu erreichen, müssen die verwendeten Komponenten der Einbettmasse nach dem Stand der Technik regelmäßig als mikrokristallines Pulver vorliegen. Problematisch ist hierbei, dass diese in den Einbettmassen verwendeten Partikel aus Quarz und Cristobalit bzw. Tridymit so klein sein können, dass sie lungengängig sind. Es besteht daher ähnlich dem Asbest die Befürchtung, dass derartige Partikel kanzerogen sein könnten. Dieser Umstand macht aufwendige Sicherheitsvorkehrungen bei der Verarbeitung von Einbettmassen notwendig. Wünschenswert ist daher, auf als potentiell kanzerogen bekannte Stoffe verzichten zu können (bzw. die Verarbeitungsprozesse und die Materialien so zu gestalten, dass ein Freiwerden der lungengängigen Bestandteile effektiv und vollständig verhindert werden kann).

Die Dokumente DE 196 07 380 C2 und DE 196 49 306 C2 betreffen keramische Einbettmassen zum Herstellen von Gußformen.

In WO 99/41030 wird ein Verfahren zur Herstellung einer keramischen Gussform (shell mold) nach dem "Prinzip der verlorenen Form" offenbart, bei dem Feuerfestschlicker verwendet werden, die in einer bimodalen Verteilung ein Sol kollodialen Siliziumoxids mit einer Partikelgröße von etwa 40 nm sowie eine Fraktion mit einer Partikelgröße von 44-177 Mikron bzw. von 325 mesh aufweisen.

Es ist die Aufgabe der vorliegenden Erfindung, (a) Verfahren zur Herstellung einer Muffel für den Fein- oder Modellguss, (b) ein Verfahren zum Herstellen eines metallischen, keramischen oder glaskeramischen Guss- oder Pressobjekts und (c) ein Kit zur Herstellung eines solchen Objekts vorzuschlagen, welche die oben genannten Nachteile überwinden.

Die Aufgabe wird für ein Verfahren zur Herstellung einer Muffel für den Fein- oder Modellguss erfindungsgemäß gelöst durch ein Verfahren mit folgenden Schritten:
- Bereitstellen einer Modellation
- Herstellen einer Einbettmasse, umfassend eine Mischung aus:
   a) einem Dispersionsmittel,
   b) einem Keramikpulver mit
      (i) einer Fraktion mit einem Durchmesser von unter 500nm (Nano-Keramikpulverfraktion), mit einem Anteil von 2-74 Vol.-% bezogen auf das Volumen der gesamten Mischung
         und
      (ii) einer Fraktion mit einem Durchmesser von über 500nm (Mikro-Keramikpulverfraktion), mit einem Anteil von 2-74 Vol.-% bezogen auf das Volumen der gesamten Mischung
   c) einem Metallpulver bestehend aus Metallen und/oder Legierungen und/oder intermetallischen Verbindungen,
   d) gegebenenfalls einem oder mehreren weiteren Zusatzstoffen und
   e) gegebenenfalls anorganischem oder organischem Bindemittel
- Ein- oder Überbelten der Modellation mit der Einbettmasse
- Verfestigen der die Modellation ein- oder überbettenden Einbettmasse durch
   a) Einfrieren.
   b) Gelieren, insbesondere aufgrund von pH-Wertveränderung und/oder
   c) Entwässern.
- während des und/oder nach dem Verfestigen Trocknen der die Modellation ein- oder überbettenden Einbettmasse durch Entfernen des Dispersionsmittels und gegebenenfalls anderer flüchtiger Bestandteile
- Entfernen der Modellation aus der getrockneten Einbettmasse und Erhitzen der getrockneten Einbettmasse, so dass eine Muffel für den Fein- oder Modellguss resultiert.

Die Bezugnahme auf "Metalle" im obigen Merkmal c) ist dabei auch als Bezugnahme auf "Halbmetalle" zu verstehen; dies gilt entsprechend für den nachfolgenden Text. Die Verwendung von Metallen (im engeren Sinne) ist Jedoch bevorzugt.

Es stellte sich verteilhafterweise heraus, dass es mit der vorliegenden Erfindung möglich ist, das Verhältnis von thermischer Expansion zu Abbindeexpansion maßgeblich in Richtung thermischer Expansion zu verschieben. Dies ist vorteilhaft, da die Abbindeexpansion anfällig gegen äußere Einflüsse ist, wohingegen die thermische Expansion gut einstell- und reproduzierbar ist.

Als Modeltationen geeignet sind insbesondere Körper, die sich bei dem Druck, der beim Ein- oder Überbetten mit der Einbettmasse existiert, nicht irreversibel verformen. Zudem sind bevorzugte Modellationen aus der getrockneten Einbettmasse weltgehend rückstandsfrei entfembar, beispielsweise durch Ausschmelzen oder durch chemische Reaktion mit Umgebungsgasen zu einem Gas. Denkbar ist auch ein Auslösen der Modellation mit einem geeigneten Lösungsmittel oder andere Verfahren zur Formentfernung vor dem Erhitzen der getrockneten Einbettmasse. Besonders vorteilhaft sind Modellationen von Zahnrestaurationen aus Gusswachs oder Kunststoffen, wie sie in der Zahnheilkunde verwendet werden ebenso wie vollständig entfernbare Materialien die in der klassischen Gießtechnik oder für Rapid Prototyping- Verfahren eingesetzt werden.

Die angegebenen Durchmesser der Partikel sind diejenigen, die nach ISO 13320-1 bestimmt werden, zum Beispiel mit dem Gerät LS 13320 der Beckman Coulter GmbH.

Im Verlaufe des erfindungsgemäßen Verfahrens wird eine Einbettmasse hergestellt, die ein Dispersionsmittel, eine Nano- und ein Mikro-Keramikpulverfraktion, ein Metallpulver, gegebenenfalls ein oder mehrere weitere Zusatzstoffe und gegebenenfalls anorganische oder organische Bindemittel umfasst.

Der Anteil an Nano- bzw. Mikro-Keramikpulverfraktion bezogen auf das Volumen der gesamten Mischung wird bestimmt, indem das Volumen der separierten Nano- bzw. Makro-Keramikfraktion zum Ausgangsvolumen der gesamten Mischung in Beziehung gesetzt wird. Die Volumenbestimmungen finden jeweils bei Standardbedingungen (25°C, 1013 hPa) statt.

Nano- und Mikro-Keramikpulverfraktion in der Mischung können dadurch erhalten werden, dass die Mischung durch Verwendung eines ersten Keramikpulvers, das im Wesentlichen aus Partikeln besteht, die unter 500nm groß sind, und eines zweiten Keramikpulvers, das im Wesentlichen aus Partikeln besteht, die über 500nm groß sind, hergestellt wird. Eine andere Möglichkeit ist die Verwendung eines polymodalen Keramikpulvers, das zwei oder mehr Maxima in der Dichtefunktion der Partikelgrößenverteilungsfunktion aufweist, z.B. eines unterhalb von 500nm und eines oberhalb von 500nm.

Als weitere Zusatzstoffe sind bevorzugt: Bakterizide, Bakteriostatika, Netzmittel, Benetzungsmittel, Porenbildner, Fließmittel, Entschäumer, Latex, etc.

Bindemittel sind chemische Substanzen, die den Zusammenhalt der Partikel untereinander verstärken und so zu einer mechanisch stabilen Einbettmasse nach dem Verfestigen bzw. nach dem Erhitzen führen. Als anorganische bzw. organische Bindemittel haben sich insbesondere als vorteilhaft erwiesen: Magnesiumoxid-Monoammoniumphosphat, Magnesiumoxid-Magnesiumchlorid-Gemisch, Zement, Gips, Stärke, Hydroyxmethylcellulose, Polyvinylalkohol/ Polyvinylacetat-Copolymer, ein Magnesiumacetat-Magnesiumoxid-Gemisch, low-loss-Binder etc..

Ein Vorteil des erfindungsgemäßen Verfahrens ist, dass die getrocknete Einbettmasse vor dem Erhitzen plastisch bearbeitbar ist und eine ausreichende Verarbeitungszeit zwischen den Verfahrensschritten verbleibt. Die getrocknete Einbettmasse ist zudem leicht aus einem Muffelformer auszubetten, der häufig beim Ein- oder Überbetten der Modellationen mit der Einbettmasse eingesetzt wird; sie weist überdies eine hohe Festigkeit auf. Die aus der getrockneten Einbettmasse hervorgegangene Muffel besitzt eine Festigkeit, die hinreichend ist, um dem im Betrieb beim Abgießen der Muffel bzw. dem Einpressen z.B. einer keramischen Masse entstehenden Druck standzuhalten. Sie ist zudem hoch temperaturkorrosionsbeständig gegenüber Schmelzen, und es kommt bei erfindungsgemäß hergestellten Muffeln kaum zu einer Kontraktion während der Gussverzugszeit. Zudem weisen Muffeln, die nach dem erfindungsgemäßen Verfahren hergestellt sind, eine hohe Temperaturwechselbeständigkeit auf.

Eine solche Muffel zeigt darüber hinaus regelmäßig eine Feinkörnigkeit, die eine genaue Abformung auch feiner Details der Modellation erlaubt, und ist dennoch hinreichend porös, um während des Gusses Gase entweichen zu lassen. Die hohe Porosität führt zudem zu einer hohen Isolationswirkung der Muffel und erleichtert im späteren Betrieb (siehe dazu unten) das Ausbetten des Gusskörpers aus der Muffel. Da das Ausbetten ein zeitintensiver Verfahrensschritt sein kann, resultiert hieraus ein deutlicher Kostenvorteil. Die Komponenten der eingesetzten Einbettmasse zeigen zudem eine gute Lagerbeständigkeit, was größere und damit kostengünstigere Gebinde erlaubt.

Ein wichtiger Vorteil ist, dass das Herstellen der Einbettmasse im erfindungsgemäßen Verfahren ohne Einsatz von einatembaren, lungengängigen Quarzpartikeln ausgeführt werden kann, was die Sicherheit für den Anwender erhöht. Es kann zudem so vorgegangen werden, dass keine oder eine nur sehr schwach ausgeprägte Abbindeexpansion der im erfindungsgemäßen Verfahren hergestellten Einbettmasse erreicht wird, was die Verarbeitungssicherheit verbessert.

Die zum Gewährleisten einer hohen Formtreue des Gusskörpers notwendige Expansion der Einbettmasse kann während des Erhitzens der getrockneten Einbettmasse genau gesteuert werden. Eine Volumenvergrößerung kann insbesondere durch Oxidation eines Metallpulvers erreicht werden, das in diesem Fall bei Herstellung der Einbettmasse eingesetzt wird. Zur Volumenvergrößerung beitragende Reaktionen sind beispielsweise die Oxidation von im Metallpulver vorteilhafterweise enthaltenem (a) Aluminium (zu Aluminiumoxid) oder (b) Niob (zu Niobpentoxid). Eine Volumenvergrößerung der Einbettmasse wird auch durch Reaktionen von Bestandteilen des Metallpulvers zu reaction bonded systems (RBS) oder Spinellen erreicht. Der Anteil an Metallpulver kann so gewählt werden, dass die nach dem erfindungsgemäßen Verfahren hergestellte Muffel nach Erkalten einen Hohlraum aufweist, der genau die Abmessungen des ursprünglichen Modellation besitzt. Durch einen erhöhten Anteil an Metallpulver kann aber alternativ erreicht werden, dass der Hohlraum größere Abmessungen hat als die ursprüngliche Modellation. Das ist insbesondere dann vorteilhaft, wenn nach Einsatz der Muffel im Gussbetrieb eine spanende Nachbearbeitung am Gusskörper durchgeführt werden soll.

Ein weiterer Vorteil ist, dass die erhaltene Muffel aus einem Material besteht, das nur eine geringe Affinität zu Schmelzen handelsüblicher Dentallegierungen hat, was ein Ausbetten erleichtert und chemische Reaktionen zwischen Muffeloberfläche und Schmelze verringert.

Die vorteilhaft hohe Formtreue resultiert auch daher, dass es beim Verfestigen der die Modellation ein- oder überbettenden Einbettmasse zu keinem ausgeprägten Schwinden kommt. Beim an das Verfestigen anschließenden Trocknen können Dispersionsmittel, Wasser, Bindemittel und andere flüchtige Bestandteile entfernt werden, ohne dass sich etwas an der makroskopischen Gestalt des Grünkörpers ändert. Das liegt daran, dass sich beim Trocknen mikroskopisch kleine Poren bilden, das Gerüst aus den nicht flüchtigen Bestandteilen jedoch (zumindest im Wesentlichen) erhalten bleibt.

Das Verfestigen dient dazu, die nicht flüchtigen Bestandteile räumlich zu fixieren, so dass sie bei den nachfolgenden Verfahrensschritten einen Grünkörper bilden, der nur sehr geringes Schwinden zeigt. Um thermische Ausdehnung zu unterdrücken wird das Verfestigen vorzugsweise bei bzw. unter Raumtemperatur (25°C) durchgeführt. In erfindungsgemäßen Verfahren erfolgt das Verfestigen deshalb durch (a) Einfrieren, (b) Gelieren, insbesondere aufgrund von pH-Wertveränderung und/oder (c) ein Entwässern. Diese Prozesse können jeweils durch Zugabe von Bindemitteln unterstützt werden.

Wird durch Gefrieren verfestigt, so wird von Gefrierguss gesprochen. Beim Gefrieren kommt es zu einer Phasentrennung innerhalb des Sols, das aus Nano-Keramikpulver und Dispersionsmittel gebildet wird. Unter einem Nano-Keramikpulver wird dabei ein Keramikpulver verstanden, bei dem die primäre Nano-Keramikpulverfraktion über 95 Gew.-% des Keramikpulvers ausmacht. Beim Einfrieren bilden sich Eis- bzw. Lösungsmittelkristalle, die im Trocknungsschritt aus dem Gefüge entfernt werden können. Die Feststoffpartikel werden dagegen verdichtet. Der vorher von den Eiskristallen ausgefüllte Raum bildet anschließend eine Pore. Es kommt daher nicht oder nur zu geringem Maße zu einer Volumenänderung des Grünkörpers. Die Porenstruktur kann zudem durch eine Steuerung der Wärmetransportvorgänge während des Einfrierens gezielt beeinflusst werden. Auf diese Art und Weise kann die Thermoschockbeständigkeit der Muffel verbessert werden. Die Porenstruktur kann bezüglich ihrer Porengröße sowie ihrer -verteilung durch das Verhältnis von Festsloff zu Dispersionsmittel, sowie durch die Abkühlgeschwindigkeit beeinflusst werden. Die Abkühlgeschwindigkeit wird neben den physikalischen Eigenschaften der Schlickerbestandteile (Wärmeleitfähigkeit, Erstarrungstemperatur der Dispersionsmittel, etc.) vorwiegend durch die. Temperatur des Kühlmediums und damit dem Temperaturgradienten bestimmt; bei einer hohen Abkühlgeschwindigkeit bilden sich kleinere Eiskristalle.

Damit die Eigenschaften der Einbettmasse möglichst homogen sind, ist es vorteilhaft, die Ausgangssubstanzen gut zu mischen. Bei einem Nano-Keramikpulver kann dabei das Problem entstehen, dass es zu Aufwlroelungen kommt und Nano-Keramikpulverpartikel in die Atemluft gelangt. Um derartige Aufwirbelungen zu unterdrücken und um eine homogene Mischung zu erreichen, ist ein Verfahren bevorzugt, in dem zum Herstellen der Einbettmasse ein Sol des Nano-Keramikpulvers in dem Disperslonsmittel hergestellt wird und dann dieses Sol mit der Mikro-Keramikpulverfraktion, dem Metallpulver und gegebenenfalls dem oder den weiteren Zusatzstoffen vermischt wird.

Das Dispersionsmittel hat insbesondere die Aufgabe, ein Verklumpen der Bestandteile in der Einbettmasse zu verhindern. Bevorzugt werden dem Dispersionsmittel Benetzungsmittel zugegeben, um ein gutes Benetzen der Partikel und (als Sekundäreffekt) der Modellation zu erreichen und ein Agglomerieren der Partikel des Keramikpulvers zu unterdrücken. Neben dieser Stabilisierung kann durch die Zugabe entsprechender Zusätze auch die Viskosität herabgesetzt werden. Durch eine niedrige Viskosität werden prinzipiell die Verarbeltbarkeit des Schlickers sowie die Abformbarkeit deutlich verbessert. Um die Einbettmasse bzw. Mischungen aus deren Vorläufersubstanzen länger lagerbar zu machen, ist es vorteilhaft, Stabilisatoren zuzusetzen. Diese können beispielsweise eine Oxidation oder andere chemische Reaktionen des Metallpulvers unterdrücken.

Um einen Befall mit Mikroorganismen zu unterdrücken ist es vorteilhaft, antimikrobielle Wirkstoffe, z.B. Bakterizide und/oder Fungizide zuzusetzen. Bevorzugt ist ein erfindungsgemäßes Verfahren, in dem das Dispersionsmittel Wasser, ein Alkohol oder eine wässrige oder alkoholische Mischung von Flüssigkeiten ist und gegebenenfalls ein oder mehrere Benetzungsmittel und/oder Stabilisatoren und/oder antimikrobielle Wirkstoffe enthält.

Wie oben bereits ausgeführt, ist es für einen hochpräzisen Guss notwendig, das Schwinden des Grünkörpers bei hohen Temperaturen und die unterschiedlichen Ausdehnungskoeffizienten des die Muffel bildenden Materials und des Gussmaterials geeignet auszugleichen. In einer bevorzugten Ausführungsform des erfindungsgemäßen Verfahrens ist daher vorgesehen, dass die Mischung ein Metallpulver und/oder einen oder mehrere weitere Zusatzstoffe enthält, die sich (a) miteinander und/oder mit gasförmigen Reaktanden unter Volumenvergrößerung umsetzen lassen oder (b) durch thermische Aktivierung zu einer Veränderung des Kristallgitters (Phasenveränderung) und damit zu einer Volumenvergrößerung veranlasst werden können, und wobei die Einbettmasse nach dem Verfestigen so behandelt wird, gegebenenfalls unter Zusatz eines oder mehrer gasförmiger Reaktanten und/oder gasbildender Reaktanten, dass das Metallpulver und/oder das Keramikpulver und/oder einer oder mehrere der weiteren Zusatzstoffe unter Volumenvergrößerung chemisch reagieren. Bevorzugt wird als Metallpulver Al/AlMg5 und/oder Niob und/oder Titan eingesetzt, also Substanzen, die unter Volumenzunahme reagieren.

| Reaktion | Volumenzunahme [%] | Reaktionsprodukt |
|---|---|---|
| 2Al + 3/2 O₂ -> Al₂O₃ | 28 | Aluminiumoxid |
| 2Nb + 5/2 O₂ -> Nb₂O₅ | 174 | Nioboxid |
| Ti + O₂ -> TiO₂ | 76 | Titandioxid |

Durch gezieltes Zudosieren der Reaktanten kann die Volumenzunahme der Einbettmasse präzise gesteuert werden. Auf diese Art und Weise kann die irreversible Volumenzunahme auf die jeweilige, später zu verwendende Schmelze genau abgestimmt werden, so dass ein Höchstmaß an Präzision und Formhaltigkeit des Gusskörpers erreicht wird.

Besonders bevorzugt ist ein erfindungsgemäßes Verfahren, in dem die zur Volumenvergrößerung führende Behandlung während des Erhitzens der Einbettmasse erfolgt. Beim Erhitzen kann es zu physikalischen Reaktionen wie z.B. einem Verdampfen von flüchtigen Bestandteilen oder Ansintern der Einbettmasse kommen. Der resultierende Volumenverlust kann durch ein gezieltes Zudosieren der Reaktanten ausgeglichen werden.

Als vorteilhaft hat sich ein erfindungsgemäßes Verfahren erwiesen, bei dem die (entsprechend zusammengesetzte) Einbettmasse unter Zusatz eines gasförmigen Reaktanten behandelt wird, der aus der Gruppe ausgewählt ist, die besteht aus: Sauerstoff, Stickstoff, Kohlenmonoxid, Kohlendioxid und deren Mischungen.

Bevorzugt ist ein erfindungsgemäßes Verfahren, in dem als Metallpulver
- ein Pulver eines Metalls und/oder
- eine Mischung von Pulvern von Metallen und/oder
- ein Pulver einer Legierung oder Verbindung aus zwei oder mehr Metallen eingesetzt wird bzw. werden, das bzw. die aus der Gruppe ausgewählt ist bzw. sind, die besteht aus: Aluminium, Magnesium, Zirkonium, Niob, Yttrium, Hafnium, Vanadium, Calcium, Kalium, Tantal, Titan, Eisen, Silizium, Germanium, Molybdän, Mangan, Zink, Zinn, Bismut, Nickel, Kobalt. (Anmerkung: wie erwähnt bedeutet "Metalle" insoweit auch "Halbmetalle").

Weiter als vorteilhaft hat sich ein Verfahren erwiesen, in dem die Mikro-Keramikpulverfraktion aus Oxiden, Mischoxiden, Nitriden, Siliciden und/oder Carbiden von einem oder mehreren Elemente besteht, die aus der folgenden Gruppe ausgewählt sind: Lithium, Beryllium, Bor, Natrium, Magnesium, Aluminium, Silizium, Kalium, Calcium, Scandium, Titan, Vanadium, Chrom, Mangan, Eisen, Kobalt, Nickel, Kupfer, Zink, Yttrium, Zirkonium, Niob, Molybdän, Technetium, Hafnium, Zinn, Cadmium, Blei, Strontium, Barium, Antimon.

Die Größe der Partikel, aus denen die die Einbettmasse bildenden Substanzen bestehen, und der Anteil von Partikeln mit einer Größe von über 500nm haben einen maßgeblichen Einfluss auf die Eigenschaften der Einbettmasse. Um hinreichend große Poren innerhalb der herzustellenden Muffel zu erhalten, wird ein Verfahren bevorzugt, in dem die Mikro-Keramikpulverfraktion einen Anteil von 30-60 Vol.-% bezogen auf das Volumen der gesamten Mischung hat.

Als besonders geeignet hat sich ein Verfahren erwiesen, in dem die Nano-Keramikpulverfraktion aus ein, zwei oder mehr keramischen Verbindungen eingesetzt wird, die aus der Gruppe ausgewählt sind, die besteht aus: SiO₂ ; Al₂O₃ , insbesondere Böhmit; Mullit; ZrO₂ ; Zirkoniumnitrat; TiO₂ , Yttriumoxid und Yttriumsalze.

Günstige Eigenschaften der Muffel werden insbesondere dann erhalten, wenn im erfindungsgemäßen Verfahren die Nano-Keramikpulverfraktion einen Anteil von 2-30 Vol.-% bezogen auf das Volumen der gesamten Mischung hat. In diesem Fall lässt sich eine Einbettmasse erhalten, die durch Gefrieren verfestigbar ist und gleichzeitig keine Rissbildungen oder Schrumpfungen während des Trocknens oder Sinterns zeigt. Darüber hinaus tritt in einem entsprechenden Verfahren beim Auftauen keine Verflüssigung des Schlickers ein; es ist folglich keine Sublimation der Muffel zum Trocknen erforderlich.

Es wurden gute Ergebnisse mit Metallpulvern erhalten, die sich in ihren Partikelgrößen deutlich unterschieden. Es hat sich jedoch herausgestellt, dass Metallpulver mit einer Partikelgröße im Bereich von 100nm bis 500µm, insbesondere 0,5µm bis 100µm, besonders vorteilhaft sind.

Organische Lösungsmittel unterliegen einer Vielzahl von Arbeitsschutzvorschriften. Ihr Einsatz setzt damit häufig aufwendige Sicherheitsvorkehrungen voraus. Zudem können Gesundheitsgefährdungen nicht immer ausgeschlossen werden. Organische Lösungsmittel sind häufig dann notwendig, wenn organische Bindemittel zur Herstellung einer Einbettmasse verwendet werden. Bevorzugt ist daher ein Verfahren, bei dem die Einbettmasse kein organisches Bindemittel umfasst.

Als in manchen Fällen vorteilhaft hat es sich herausgestellt, das erfindungsgemäße Verfahren so zu gestalten, dass die Einbettmasse vor dem Ein- oder Überbetten der Modellation 20-70 Vol.-% Feststoffe enthält. Der Anteil an Feststoffen wird erhalten, indem bei Standardbedingungen vom Volumen der Einbettmasse das Volumen der flüssigen Bestandteile abgezogen wird.

Gemäß einem weiteren Aspekt der Erfindung wird die gestellte Aufgabe gelöst durch ein Verfahren zum Herstellen eines metallischen, keramischen oder glaskeramischen Guss- oder Pressobjekts, das die folgenden Schritte umfasst:
- Herstellen einer Muffel nach einem erfindungsgemäßen Verfahren zur Herstellung einer Muffel,
- (a) Abgießen der Muffel mit einem Metall oder einer metallischen Legierung oder (b) Einpressen einer fließfähigen (i) keramischen oder (ii) glaskeramischen Masse.
Die Bemerkungen zu bevorzugten Ausgestaltungen des erfindungsgemäßen Verfahrens zum Herstellen einer Muffel gelten natürlich auch insoweit.

Wie oben bereits erwähnt, ist es für ein präzises Abformen der Modellation und damit eine hohe Formgenauigkeit des Gusskörpers notwendig, die unterschiedlichen Ausdehnungen und Schrumpfungsvorgänge möglichst vollständig zu kompensieren. Daher ist ein erfindungsgemäßes Verfahren zum Herstellen eines metallischen, keramischen oder glaskeramischen Guss- oder Pressobjekts, besonders bevorzugt, in dem
- die Bedingungen zum Herstellen der Muffel, einschließlich der Auswahl der Mischungsbestandteile für die Herstellung der Einbettmasse, und
- die Bedingungen (a) beim Abgießen, einschließlich der Auswahl des Metalls bzw. der metallischen Legierung, bzw. (b) beim Einpressen der keramischen oder glaskeramischen Masse,
so aufeinander abgestimmt sind, dass es bei der Herstellung der Muffel zu einer Volumenvergrößerung kommt, die die Volumenkontraktion des Metalls bzw. der metallischen Legierung bzw. der keramischen oder glaskeramischen Masse beim Erstarren nach dem Abgießen bzw. Einpressen in der Muffel zumindest teilweise ausgleicht.

Gemäß einem weiteren Aspekt der Erfindung wird die Aufgabe durch ein Kit zur Herstellung einer metallischen, keramischen oder glaskeramischen Restauration gelöst, das umfasst:
(a) eine oder mehrere Komponenten, insgesamt umfassend die folgenden Bestandteile:
   - ein Sol eines Keramikpulvers mit Partikeln eines Durchmessers von unter 500 nm (Nano-Keramikpulverfraktion) in einem Dispersionsmittel,
   - ein Keramikpulver mit Partikeln eines Durchmessers von über 500 nm (Mikro-Keramikpulverfraktion),
   - ein Metallpulver sowie
   - gegebenenfalls einen oder mehrere weitere Zusatzstoffe,
   wobei die Bestandteile so aufeinander abgestimmt sind, dass aus ihnen eine Muffel für den Fein- oder Modellguss herstellbar ist und
(b)
   (i) ein Metall oder eine metallische Legierung, wobei die Bestandteile und das Metall bzw. die metallische Legierung so aufeinander abgestimmt sind, dass bei Herstellung einer Muffel aus den Bestandteilen eine Volumenvergrößerung auftreten kann, die die Volumenkontraktion des Metalls bzw. der metallischen Legierung beim Erstarren nach dem Abguss in der Muffel zumindest teilweise ausgleicht
      und/oder
   (ii) eine Keramik oder Glaskeramik,
      wobei die Bestandteile und die Keramik bzw. die Glaskeramik so aufeinander abgestimmt sind, dass bei Herstellung einer Muffel aus den Bestandteilen eine Volumenvergrößerung auftreten kann, die die Volumenkontraktion der Keramik bzw. der Glaskeramik beim Erstarren nach dem Füllen der Muffel zumindest teilweise ausgleicht.

Für die Herstellung von Muffeln ist es vorteilhaft, wenn alle notwendigen Komponenten so in einem Kit zusammengefasst sind, dass bei der Verarbeitung keine Gesundheitsgefährdungen zu befürchten sind. Das erfindungsgemäße Kit weist die Nano-Keramikpulverfraktion als Sol auf, sodass die Einbettmasse mit geringem Aufwand herstellbar ist. Die gute Lagerbarkeit gestattet es zudem, das Kit in im Vergleich zum Stand der Technik größeren Gebinden anzubieten. Alternativ können auch ein alle Komponenten enthaltender Schlicker oder andere Kombinationen der Darreichungsform gewählt werden wie z.B. Schlicker/Flüssigkeit, Schlicker/Schlicker etc..

Es ist daher bevorzugt, dass ein mindestens zwei Komponenten umfassender Schlicker enthalten ist. Insbesondere bevorzugt ist, dass neben dem Schlicker das Dispersionsmittel oder ein weiterer Schlicker umfasst ist.

Das erfindungsgemäße Verfahren zur Herstellung einer Muffel für den Fein- oder Modellguss wird im Folgenden anhand eines Ausführungsbeispiels dargestellt:

### Beispiel: Herstellung einer Muffel

1. Zunächst wird aus dentalem Gusswachs der Firma BEGO eine Modellation einer Zahnrestauration hergestellt, die einen Wachsdraht umfasst.
2. Anschließend wird die Einbettmasse hergestellt. Hierzu werden 50g eines bereits stabilisiertes Sols verwendet, das von der Firma Akzo Nobel unter dem Namen Bindzil NH3/30 vertrieben wird. Dieses Sol besteht aus 15g Siliziumdioxid als Nano-Keramikpulver, das in 35g mit Ammoniak stabilisiertem Wasser enthalten ist. Zu diesem Sol werden unter Rühren als Mikro-Keramikpulverfraktion 50g Aluminiumoxid CT3000SG der Firma Alcoa und 100g Mullit Symulox M72 der Firma Nabaltec zugemischt.
   Anschließend erfolgt die Zugabe von 15 g einer AlMg5 -Legierung der Firma Eckart als Metallpulver. Das Legierungspulver wurde druckluftverdüst. Es wurde eine Klassifizierung mit einem 25µm- Sieb durchgeführt; nur die Feinfraktion wird verwendet. Ein Bindemittel wird nicht zugegeben.
3. Die Modellation wird mit dem Wachsdraht nach unten auf dem Boden eines Muffelsockels befestigt und ein Muffelformer für eine Dreiermuffel übergestülpt. In die so hergestellte Muffelform, in welcher sich die aufgesockelte Modellation befindet, wird die Einbettmasse gegossen, sodass die Modellation vollständig eingebettet wird.
4. Die Muffelform wird in ein Eisfach bei - 18°C gestellt, eingefroren und die Einbettmasse so verfestigt. In diesem Zustand wird die Einbettmasse entformt. Anschließend wird die verfestigte Einbettmasse in einem Trockenschrank bei 60°C über Nacht getrocknet. Die getrocknete Einbettmasse wird danach mit einer Aufheizrate von 7 K/min auf 1000°C erhitzt. Während des Erhitzens schmilzt das Gusswachs weitgehend aus, verbliebene Reste in der aus der Einbettmasse entstehenden Muffel verbrennen weitgehend rückstandsfrei.

Während des Erhitzens reagiert das AlMg5 -Pulver unter Volumenzunahme mit Luftsauerstoff zu Aluminiumoxid, Magnesiumoxid und Spinell. Der Anteil an AlMg5- Pulver an der Einbettmasse ist dabei so gewählt, dass die Volumenzunahme die thermische Kontraktion des zu gießenden Metalls kompensiert.

## Patentansprüche

1. Verfahren zur Herstellung einer Muffel für den Fein- oder Modellguss mit folgenden Schritten;
- Bereitstellen einer Modellation
- Herstellen einer Einbettmasse, umfassend eine Mischung aus:
a) einem Dispersionsmittel.
b) einem Keramikpulver mit
(i) einer Fraktion mit einem Durchmesser von unter 500nm (Nano-Keramikpulverfraktion), mit einem Anteil von 2-74 Sol.-% bezogen auf das Volumen der gesamten Mischung und
(ii) einer Fraktion mit einem Durchmesser von über 500nm (Mikro-Keramikpulverfraktion), mit einem Anteil von 2-74 Vol,-% bezogen auf das Volumen der gesamten Mischung
c) einem Metallpulver bestehend aus Metallen und/oder Legierungen und/oder intermetallischen Verbindungen,
d) gegebenenfalls einem oder mehreren weiteren Zusatzstoffen und
e) gegebenenfalls anorganischem oder organischem Bindemittel
- Ein- oder Überbetten der Modellation mit der Einbettmasse
- Verfestigen der die Modellation ein- oder überbettenden Einbettmasse durch
a) Einfrieren,
b) Gelleren, insbesondere aufgrund von pH-Wertveränderung und/oder
c) Entwässern,
- während des und/oder nach dem Verfestigen Trocknen der die Modellation ein- oder überbettenden Einbettmasse durch Entfernen des Dispersionsmittels und gegebenenfalls anderer flüchtiger Bestandteile
- Entfernen der Modellation aus der getrockneten Einbettmasse und Erhitzen der getrockneten Einbettmasse, so dass eine Muffel für den Fein- oder Modellguss resultiert.

2. Verfahren nach Anspruch 1, wobei zum Herstellen der Einbettmasse
- ein Sol der Nano-Keramikpulverfraktion in dem Dispersionsmittel hergestellt wird und dann
- dieses Sol mit der Mikro-Keramikpulverfraktion, dem Metallpulver und gegebenenfalls dem oder den weiteren Zusatzstoffen vermischt wird.

3. Verfahren nach einem der vorangehenden Ansprüche, wobei das Dispersionsmittel Wasser, ein Alkohol oder eine wässrige oder alkoholische Mischung von Flüssigkeiten ist und gegebenenfalls ein oder mehrere Benetzungsmittel und/oder Stabilisatoren und/oder antimikrobielle Wirkstoffe enthält.

4. Verfahren nach einem der vorangehenden Ansprüche, wobei in der Mischung enthaltenes Metallpulver und/oder eine in der Mischung enthaltene Mikro-Keramikpulverfraktion und/oder ein oder mehrere weitere in der Mischung enthaltene Zusatzstoffe (a) miteinander und/oder mit gasförmigen Reaktanden unter Volumenvergrößerung umsetzbar sind oder (b) durch thermische Aktivierung zu einer Veränderung des Kristallgitters (Phasenveränderung) und damit zu einer Volumenvergrößerung veranlasst werden können, und wobei die Einbettmasse nach dem Verfestigen so behandelt wird, gegebenenfalls unter Zusatz eines oder mehrer gasförmiger Reaktanten und/oder gasbildender Reaktanten, dass das Metallpulver und/oder das Keramikpulver und/oder einer oder mehrere der weiteren Zusatzstoffe unter Volumenvergrößerung (a) chemisch reagieren oder (b) eine Phasenveränderung durchführen.

5. Verfahren nach Anspruch 4, wobei die zur Volumenvergrößerung führende Behandlung während des Erhitzens der Einbettmasse erfolgt.

6. Verfahren nach Anspruch 4 und/oder 5, wobei die Einbettmasse unter Zusatz eines gasförmigen Reaktanten behandelt wird, der aus der Gruppe ausgewählt ist, die besteht aus: Sauerstoff, Stickstoff, Kohlenmonoxid, Kohlendioxid und deren Mischungen.

7. Verfahren nach einem der vorangehenden Ansprüche, wobei als Metallpulver
- ein Pulver eines Metalls und/oder
- eine Mischung von Pulvern von Metallen und/oder
- ein Pulver einer Legierung oder Verbindung aus zwei oder mehr Metallen eingesetzt wird bzw. werden, das bzw. die aus der Gruppe ausgewählt ist bzw. sind, die besteht aus: Aluminium, Magnesium, Zirkonium, Niob, Yttrium, Hafnium, Vanadium, Calcium, Kalium, Tantal, Titan, Eisen, Silizium, Germanium, Molybdän, Mangan, Zink, Zinn, Bismut, Nickel, Kobalt.

8. Verfahren nach einem der vorangehenden Ansprüche, wobei die Mikro-Keramikpulverfraktion aus Oxiden, Mischoxiden, Siliciden, Nitriden und/oder Carbiden von einem oder mehreren Elemente besteht, die aus der folgenden Gruppe ausgewählt sind: Lithium, Beryllium, Bor, Natrium, Magnesium, Aluminium, Silizium, Kalium, Calcium, Scandium, Titan, Vanadium, Chrom, Mangan, Eisen, Kobalt, Nickel, Kupfer, Zink, Yttrium, Zirkonium, Niob, Molybdän, Technetium, Hafnium, Zinn, Cadmium, Blei, Strontium, Barium, Antimon.

9. Verfahren nach einem der vorangehenden Ansprüche, wobei die Mikro-Keramikpulverfraktion einen Anteil von 30-60 Vol.-% bezogen auf das Volumen der gesamten Mischung hat.

10. Verfahren nach einem der vorangehenden Ansprüche, wobei als Nano-Keramikpulverfraktion ein, zwei oder mehr keramische Verbindungen eingesetzt werden, die aus der Gruppe ausgewählt sind, die besteht aus: SiO₂ ; Al₂O₃ , insbesondere Böhmit; ZrO₂ ; Yttriumoxid; Yttriumsalze; Zirkoniumnitrat; TiO₂ .

11. Verfahren nach einem der vorangehenden Ansprüche, wobei die Nano-Keramikpulverfraktion einen Anteil von 2-30 Vol.-% bezogen auf das Volumen der gesamten Mischung hat.

12. Verfahren nach einem der vorstehenden Ansprüche, wobei das Metallpulver aus Partikeln mit einer Partikelgröße im Bereich von 100nm bis 500µm, insbesondere 0,5µm bis 100µm besteht.

13. Verfahren nach einem der vorangehenden Ansprüche, wobei die Einbettmasse kein organisches Bindemittel umfasst.

14. Verfahren nach einem der vorangehenden Ansprüche, wobei die Einbettmasse vor dem Ein- oder Überbetten der Modellation vorzugsweise 20-70 Vol.-% Feststoffe, bezogen auf das Gesamtvolumen, enthält.

15. Verfahren zum Herstellen eines metallischen, keramischen oder glaskeramischen Guss- oder Pressobjekts, umfassend die folgenden Schritte:
- Herstellen einer Muffel nach einem Verfahren gemäß einem der vorangehenden Ansprüche,
- (a) Abgießen der Muffel mit einem Metall oder einer metallischen Legierung oder (b) Einpressen einer fließfähigen (i) keramischen oder (ii) glaskeramischen Masse.

16. Verfahren nach Anspruch 15, wobei
- die Bedingungen zum Herstellen der Muffel, einschließlich der Auswahl der Mischungsbestandteile für die Herstellung der Einbettmasse, und
- die Bedingungen (a) beim Abgießen, einschließlich der Auswahl des Metalls bzw. der metallischen Legierung, bzw. (b) beim Einpressen der keramischen oder glaskeramischen Masse,
so aufeinander abgestimmt sind, dass es bei der Herstellung der Muffel zu einer Volumenvergrößerung kommt, die die Volumenkontraktion des Metalls bzw. der metallischen Legierung bzw. der keramischen oder glaskeramischen Masse beim Erstarren nach dem Abgießen bzw. Einpressen in der Muffel zumindest teilweise ausgleicht.

17. Kit zur Herstellung eines metallischen und/oder keramischen und/oder glaskeramischen Guss- oder Pressobjekts umfassend:
(a) eine oder mehrere Komponenten, insgesamt umfassend die fol genden Bestandteile:
- ein Sol eines Keramikpulvers mit Partikeln eines Durchmessers von unter 500 nm (Nano-Keramikpulverfraktion) in einem Dispersionsmittel,
- ein Keramikpulver mit Partikeln eines Durchmessers von über 500 nm (Mikro-Keramikpulverfraktion),
- ein Metallpulver sowie
- gegebenenfalls einen oder mehrere weitere Zusatzstoffe,
wobei die Bestandteile so aufeinander abgestimmt sind, dass aus ihnen eine Muffel für den Fein- oder Modellguss herstellbar ist, und
(b) (i) ein Metall oder eine metallische Legierung,
wobei die Bestandteile und das Metall bzw. die metallische Legierung so aufeinander abgestimmt sind, dass bei Herstellung einer Muffel aus den Bestandteilen eine Volumenvergrößerung auftreten kann, die die Volumenkontraktion des Metalls bzw. der metallischen Legierung beim Erstarren nach dem Abguss in der Muffel zumindest teilweise ausgleicht und/oder
(ii) eine Keramik oder Glaskeramik,
wobei die Bestandteile und die Keramik bzw. die Glaskeramik so aufeinander abgestimmt sind, dass bei Herstellung einer Muffel aus den Bestandteilen eine Volumenvergrößerung auftreten kann, die die Volumenkontraktion der Keramik bzw. der Glaskeramik beim Erstarren nach dem Füllen der Muffel zumindest teilweise ausgleicht.

18. Kit nach Anspruch 17, **dadurch gekennzeichnet, dass** ein mindestens zwei Komponenten umfassender Schlicker enthalten ist.

19. Kit nach Anspruch 18, **dadurch gekennzeichnet, dass** neben dem Schlicker das Dispersionsmittel oder ein weiterer Schlicker umfasst ist.

## Claims

1. A method of manufacturing a muffle for investment or model casting, comprising the following steps:
- provision of a pattern
- production of an embedding material, comprising a mixture of:
a) a dispersing agent,
b) a ceramic powder having
(i) a fraction with a diameter below 500 nm (nano ceramic powder fraction), in a proportion of 2-74 vol.% based on the volume of the whole mixture and
(ii) a fraction with a diameter above 500 nm (micro ceramic powder fraction), in a proportion of 2-74 vol.% based on the volume of the whole mixture,
c) a metal powder consisting of metals and/or alloys and/or intermetallic compounds,
d) optionally one or more further additives and
e) optionally an inorganic or organic binder
- embedding or covering the pattern with the embedding material
- consolidating the embedding material which embeds or covers the pattern by
a) freezing
b) gelation, in particular by virtue of changing the pH value, and/or
c) dehydration,
- during and/or after consolidation, drying the embedding material which embeds or covers the pattern by removal of the dispersing agent and optionally other volatile constituents
- removal of the pattern from the dried embedding material and heating the dried embedding material so that a muffle for investment or model casting is produced.

2. A method according to claim 1, wherein, to produce the embedding material,
- a sol of the nano ceramic powder fraction in the dispersing agent is produced and then
- this sol is mixed with the micro ceramic powder fraction, the metal powder and, if applicable, the further additive or additives.

3. A method according to either one of the preceding claims, wherein the dispersing agent is water, an alcohol or an aqueous or alcoholic mixture of liquids and optionally contains one or more wetting agents and/or stabilisers and/or antimicrobial agents.

4. A method according to any one of the preceding claims, wherein metal powder contained in the mixture and/or a micro ceramic powder fraction contained in the mixture and/or one or more further additives contained in the mixture (a) are reactable with one another and/or with gaseous reactants in order to increase the volume or (b) by thermal activation can induce a change in the crystal lattice (phase change) and thus an increase in the volume, and wherein the embedding material is treated after consolidation, optionally with the addition of one or more gaseous reactants and/or gas-forming reactants, so that the metal powder and/or the ceramic powder and/or one or more of the further additives (a) react chemically or (b) implement a phase change in order to increase the volume.

5. A method according to claim 4, wherein the treatment leading to the volume increase is carried out during heating of the embedding material.

6. A method according to claim 4 and/or 5, wherein the embedding material is treated by addition of a gaseous reactant which is selected from the group consisting of: oxygen, nitrogen, carbon monoxide, carbon dioxide and mixtures thereof.

7. A method according to any one of the preceding claims, wherein the metal powder used is
- a powder of a metal and/or
- a mixture of powders of metals and/or
- a powder of an alloy or combination of two or more metals, which metal(s) is/are selected from the group consisting of: aluminium, magnesium, zirconium, niobium, yttrium, hafnium, vanadium, calcium, potassium, tantalum, titanium, iron, silicon, germanium, molybdenum, manganese, zinc, tin, bismuth, nickel, cobalt.

8. A method according to any one of the preceding claims, wherein the micro ceramic powder fraction consists of oxides, mixed oxides, silicides, nitrides and/or carbides or one or more elements which are selected from the following group: lithium, beryllium, boron, sodium, magnesium, aluminium, silicon, potassium, calcium, scandium, titanium, vanadium, chromium, manganese, iron, cobalt, nickel, copper, zinc, yttrium, zirconium, niobium, molybdenum, technetium, hafnium, tin, cadmium, lead, strontium, barium, antimony.

9. A method according to any one of the preceding claims, wherein the micro ceramic powder fraction is in a proportion of 30-60 vol.% based on the volume of the whole mixture.

10. A method according to any one of the preceding claims, wherein one, two or more ceramic compounds are used for the nano ceramic powder fraction and are selected from the group consisting of: SiO₂; Al₂O₃, in particular boehmite; ZrO₂; yttrium oxide; yttrium salts; zirconium nitrate; TiO₂.

11. A method according to any one of the preceding claims, wherein the nano ceramic powder fraction is in a proportion of 2-30 vol.% based on the volume of the whole mixture.

12. A method according to any one of the preceding claims, wherein the metal powder consists of particles with a particle size in the range from 100 nm to 500 µm, especially 0.5 µm to 100 µm.

13. A method according to any one of the preceding claims, wherein the embedding material does not include an organic binder.

14. A method according to any one of the preceding claims, wherein the embedding material preferably contains 20-70 vol.% of solids, based on the total volume, before the pattern is embedded or covered.

15. A method of manufacturing a metallic, ceramic or glass ceramic casting or moulding, comprising the following steps:
- manufacturing a muffle by a method according to any one of the preceding claims,
- (a) pouring a metal or a metal alloy into the muffle or (b) forcing in a fluid (i) ceramic or (ii) glass ceramic material.

16. A method according to claim 15, wherein
- the conditions for manufacturing the muffle, including the selection of the mixture constituents for production of the embedding material, and
- the conditions (a) during pouring, including the selection of the metal or the metal alloy, or (b) when forcing in the ceramic or glass ceramic material
are adapted to one another so that, during manufacture of the muffle, an increase in volume is produced which at least partly compensates for the decrease in volume of the metal or the metal alloy or the ceramic or glass ceramic material during solidification after it has been poured or forced into the muffle.

17. A kit for manufacturing a metallic and/or ceramic and/or glass ceramic casting or moulding, comprising:
(a) one or more components, overall comprising the following constituents:
- a sol of a ceramic powder with particles having a diameter below 500 nm (nano ceramic powder fraction) in a dispersing agent,
- a ceramic powder with particles having a diameter above 500 nm (micro ceramic powder fraction),
- a metal powder and
- optionally one or more further additives,
wherein the constituents are adapted to one another so that a muffle for investment or model casting can be manufactured therefrom, and
(b) (i) a metal or a metal alloy,
wherein the constituents and the metal or the metal alloy are adapted to one another so that, during manufacture of a muffle from the constituents, an increase in volume can occur which at least partly compensates for the decrease in volume of the metal or the metal alloy during solidification after it has been poured into the muffle and/or
(ii) a ceramic or glass ceramic,
wherein the constituents and the ceramic or the glass ceramic are adapted to one another so that, during manufacture of a muffle from the constituents, an increase in volume can occur which at least partly compensates for the decrease in volume of the ceramic or the glass ceramic during solidification after the muffle has been filled.

18. A kit according to claim 17, **characterised in that** it contains a slip comprising at least two components.

19. A kit according to claim 18, **characterised in that** in addition to the slip it includes the dispersing agent or a further slip.

## Revendications

1. Procédé de fabrication d'un moufle pour le moulage de précision ou le moulage sur modèle comprenant les étapes suivantes consistant à :
- préparer un modelage
- fabriquer un matériau d'enrobement comprenant un mélange constitué de :
a) un agent de dispersion,
b) une poudre céramique avec
(i) une fraction ayant un diamètre inférieur à 500 nm (fraction de poudre céramique de la taille du nanomètre), ayant une proportion de 2 à 74 % en volume rapportée au volume du mélange total et
(ii) une fraction ayant un diamètre supérieur à 500 nm (fraction de poudre céramique de la taille du micromètre), ayant une proportion de 2 à 74 % en volume rapportée au volume du mélange total
c) une poudre métallique constituée de métaux et/ou d'alliages et/ou de composés intermétalliques,
d) le cas échéant un ou plusieurs additifs et
e) le cas échéant des liants inorganiques ou organiques
- noyer ou enrober le modelage avec le matériau d'enrobement
- durcir le matériau d'enrobement noyant ou enrobant le modelage par
a) congélation,
b) gélification, en particulier en raison d'une modification de la valeur du pH et/ou
c) déshydratation,
- pendant et/ou après le durcissement par séchage du matériau d'enrobement noyant ou enrobant le modelage par élimination de l'agent de dispersion et le cas échéant des autres constituants volatils
- éliminer le modelage du matériau d'enrobement séché et chauffer le matériau d'enrobement séché de sorte qu'un moufle pour le moulage de précision ou le moulage sur modèle en résulte.

2. Procédé selon la revendication 1, dans lequel, pour la fabrication du matériau d'enrobement
- on fabrique un sol de fraction de poudre céramique de la taille du nanomètre dans l'agent de dispersion puis
- on mélange ce sol avec la fraction de poudre céramique de la taille du micromètre, la poudre métallique et le cas échéant le ou les additifs supplémentaires.

3. Procédé selon l'une quelconque des revendications précédentes, l'agent de dispersion étant de l'eau, un alcool ou un mélange aqueux ou alcoolisé de liquides et contenant le cas échéant un ou plusieurs agents mouillants et/ou stabilisants et/ou ingrédients actifs antimicrobiens.

4. Procédé selon l'une quelconque des revendications précédentes, la poudre métallique contenue dans le mélange et/ou une fraction de poudre céramique de la taille du micromètre contenue dans le mélange et/ou un ou plusieurs additifs supplémentaires contenus dans le mélange (a) conjointement et/ou des réactifs gazéiformes pouvant être transformés par augmentation de volume ou (b) par activation thermique pour une modification du réseau cristallin (modification de phase) et pouvant ainsi être contraints à une augmentation de volume, et le matériau d'enrobement étant traité après le durcissement, le cas échéant avec addition d'un ou plusieurs réactifs gazéiformes et/ou réactifs gazeux, de sorte que la poudre métallique et/ou la poudre céramique et/ou un ou plusieurs des additifs supplémentaires (a) réagissent chimiquement avec augmentation de volume ou (b) effectuent une modification de phase.

5. Procédé selon la revendication 4, le traitement conduisant à l'augmentation de volume ayant lieu pendant le chauffage du matériau d'enrobement.

6. Procédé selon la revendication 4 et/ou 5, le matériau d'enrobement étant traité avec addition d'un réactif gazéiforme, choisi dans le groupe constitué par : l'oxygène, l'azote, le monoxyde de carbone, le dioxyde de carbone et leurs mélanges.

7. Procédé selon l'une quelconque des revendications précédentes,
- une poudre d'un métal et/ou
- un mélange de poudres de métaux et/ou
- une poudre d'un alliage ou d'un composé de deux métaux ou plus pouvant respectivement être utilisés en tant que poudre métallique, laquelle est respectivement choisie dans le groupe constitué par : l'aluminium, le magnésium, le zirconium, le niobium, l'yttrium, l'hafnium, le vanadium, le calcium, le potassium, le tantale, le titane, le fer, le silicium, le germanium, le molybdène, le manganèse, le zinc, l'étain, le bismuth, le nickel, le cobalt.

8. Procédé selon l'une quelconque des revendications précédentes, la fraction de poudre céramique de la taille du micromètre étant constituée d'oxydes, de mélanges d'oxydes, de siliciures, de nitrures et/ou de carbures d'un ou plusieurs éléments choisis dans le groupe constitué par : le lithium, le béryllium, le bore, le sodium, le magnésium, l'aluminium, le silicium, le potassium, le calcium, le scandium, le titane, le vanadium, le chrome, le manganèse, le fer, le cobalt, le nickel, le cuivre, le zinc, l'yttrium, le zirconium, le niobium, le molybdène, le technétium, l'hafnium, l'étain, le cadmium, le plomb, le strontium, le baryum, l'antimoine.

9. Procédé selon l'une quelconque des revendications précédentes, la fraction de poudre céramique de la taille du micromètre ayant une proportion de 30 à 60 % en volume rapportée au volume du mélange total.

10. Procédé selon l'une quelconque des revendications précédentes, un, deux composés céramiques ou plus étant utilisés en tant que fraction de poudre céramique de la taille du nanomètre, lesquels sont choisis dans le groupe constitué par ; SiO₂ ; Al₂O₃ ; en particulier la boehmite ; ZrO₂ ; l'oxyde d'yttrium ; un sel d'yttrium ; le nitrate de zirconium ; TiO₂.

11. Procédé selon l'une quelconque des revendications précédentes, la fraction de poudre céramique de la taille du nanomètre ayant une proportion de 2 à 30 % en volume rapportée au volume du mélange total.

12. Procédé selon l'une quelconque des revendications précédentes, la poudre métallique étant constituée de particules ayant une taille de particule dans la gamme de 100 nm à 500 µm, en particulier 0,5 µm à 100 µm.

13. Procédé selon l'une quelconque des revendications précédentes, le matériau d'enrobement ne comprenant pas de liant organique.

14. Procédé selon l'une quelconque des revendications précédentes, le matériau d'enrobement contenant, avant de noyer ou d'enrober le modelage, de préférence de 20 à 70 % en volume de matières solides, rapportés au volume total.

15. Procédé de fabrication d'un objet de moulage ou d'estampage métallique, céramique ou vitrocéramique comprenant les étapes suivantes consistant à :
- fabriquer un moufle selon un procédé selon l'une quelconque des revendications précédentes,
- (a) mouler le moufle avec un métal ou un alliage métallique ou (b) estamper un matériau coulant (i) céramique ou (ii) vitrocéramique.

16. Procédé selon la revendication 15, dans lequel
- les conditions de fabrication du moufle, y compris le choix des constituants de mélange pour la fabrication du matériau d'enrobement, et
- les conditions (a) lors du moulage, y compris le choix du métal respectivement de l'alliage métallique, respectivement (b) lors de l'estampage du matériau céramique ou vitrocéramique,
sont définis de sorte que lors de la fabrication du moufle, il y a une augmentation de volume, laquelle compense au moins partiellement la contraction de volume du métal respectivement de l'alliage métallique respectivement du matériau céramique ou vitrocéramique lors du refroidissement après le moulage respectivement l'estampage dans le moufle.

17. Nécessaire pour la fabrication d'un objet de moulage ou d'estampage métallique et/ou céramique et/ou vitrocéramique comprenant :
(a) un ou plusieurs composants comprenant au total les constituants suivants :
- un sol d'une poudre céramique ayant des particules ayant un diamètre inférieur à 500 nm (fraction de poudre céramique de la taille du nanomètre) dans un agent de dispersion,
- une poudre céramique ayant des particules ayant un diamètre supérieur à 500 nm (fraction de poudre céramique de la taille du micromètre),
- une poudre métallique ainsi que
- le cas échéant, un ou plusieurs additifs,
les constituants étant définis de sorte qu'on peut fabriquer un moufle pour le moulage de précision ou le moulage sur modèle à partir de ceux-ci, et
(b) (i) un métal ou un alliage métallique,
les constituants et le métal respectivement l'alliage métallique étant définis de sorte que lors de la fabrication d'un moufle à partir des constituants, une augmentation de volume peut se produire, laquelle compense au moins partiellement la contraction de volume du métal respectivement de l'alliage métallique lors du refroidissement après le moulage dans le moufle et/ou
(ii) une céramique ou une vitrocéramique,
les constituants et la céramique respectivement la vitrocéramique étant définis de sorte que lors de la fabrication d'un moufle à partir des constituants, une augmentation de volume peut se produire, laquelle compense au moins partiellement la contraction de volume de la céramique respectivement de la vitrocéramique lors du refroidissement après le remplissage du moufle.

18. Nécessaire selon la revendication 17, **caractérisé en ce qu'**il contient au moins deux composants en suspension.

19. Nécessaire selon la revendication 18, **caractérisé en ce qu'**il comprend, outre la suspension, l'agent de dispersion ou une autre suspension.
